Europäisches Patentamt

European Patent Office

Office européen des brevets

(11) Publication number: **0 040 033**

**B1**

(12) EUROPEAN PATENT SPECIFICATION

(45) Date of publication of patent specification: **25.11.87**

(51) Int. Cl.⁴: **G 02 B 5/30, G 02 B 27/28**

(21) Application number: **81301963.5**

(22) Date of filing: **05.05.81**

(54) Prism polarizer.

(30) Priority: **09.05.80 JP 63659/80 u**

(43) Date of publication of application:
**18.11.81 Bulletin 81/46**

(45) Publication of the grant of the patent:
**25.11.87 Bulletin 87/48**

(84) Designated Contracting States:
**DE FR GB IT**

(56) References cited:
**CH-A- 482 210**
**FR-A- 918 102**
**FR-A-1 445 758**
**GB-A-1 141 599**
**US-A-2 476 014**
**US-A-3 267 804**
**US-A-3 612 652**
**US-A-3 620 593**

**Bull. Soc. fr. Mineral Cristallogr. No. 91 Vol. 91
(1968) pages 350-354, Naumann**

**Optik f. Konstrukteure, 1960, pages 100-101
ELECTRONICS LETTERS, Vol. 15, No. 25, 6
December 1979 H. IWAMAURA et al. "Simple
Polarisation-Independent Optical Circulator for
Optical Transmission Systems" pages 830, 831**

(73) Proprietor: **FUJITSU LIMITED**
**1015, Kamikodanaka Nakahara-ku
Kawasaki-shi Kanagawa 211 (JP)**

(72) Inventor: **Shirasaki, Masataka
Minowa bldg. 601 1461 Takaishi
Tama-ku Kawasaki-shi Kanagawa 215 (US)**

(74) Representative: **Allman, Peter John et al
MARKS & CLERK Suite 301 Sunlight House
Quay Street
Manchester M3 3JY (GB)**

# Description

The present invention relates to an optical device and, in particular, it relates to a prism polariser which is suitable for use in an optical circulator of small size.

Various improved passive optical devices have been proposed for use in optical transmission systems. An optical circulator is one such passive device for use in an optical transmission system. The optical circulator has, for example, four ports for the entrance and exit of light beams. A beam introduced at a first of the ports is transmitted to a second port. A beam introduced at the second port is transmitted to a third port. A beam introduced at the third port is transmitted to a fourth port. A beam introduced at the fourth port is transmitted to the first port. The four ports are optically interconnected so that the beam is cyclically transmitted in the following manner, i.e. 1→2, 2→3, 3→4, 4→1. Such an optical circulator makes it possible to realise complicated functions such as two-way communication or monitoring obstacles in a data link of an optical transmission system.

The occurrence of transmission loss or crosstalk must be minised in optical circulators. In order to obviate transmission loss and crosstalk, rays of light emitted from an inlet optical fiber are made parallel by means of a lens, so as to make a beam. Then, this beam is transmitted in a prescribed manner in the device. After that, the beam is converged to an outlet optical fiber by another lens. However, some of the light leaks from the beam even though the rays of the beam are made parallel by the lens. Therefore, there is some transmission loss between the inlet fiber and the outlet fiber. In view of this, it is desirable that the optical device is small in size so as to minimise the path length of light.

In general, a prism polariser used in an optical circulator comprises two prisms of anisotropic crystals facing each other. The prisms are usually made of calcite. An incident beam upon the facing plane is separated into two polarised beams, i.e. a beam of ordinary rays and a beam of extraordinary rays. The polarisations of the beams are perpendicular to each other.

Examples of such a prism polariser or beam splitter are disclosed in Japanese Patent Publications 45-13278 and 52-49967 and Laid Open Japanese Patent Application 49-93028. A further prism polariser is described in French Patent No. 1445758, but in that further polariser the size of the prisms is large when compared with the diameter of the beam. Therefore, it is difficult to make the optical polariser small in size. Furthermore, the beam is not separated efficiently into ordinary and extraordinary rays, and therefore excessive transmission losses and crosstalk occur.

A still further prism polariser is described in Bull. Soc. Fr. Mineral Cristallogr. No. 91, volume 9 (1968), E. LANDAIS "Un prisme polarisant pour l'infrafouge entre 2,6 et 5 microns", pages 350—354. This shows a prism polariser comprising a pair of uniaxial crystal prisms which define two facing planes extending parallel to one another and between which a thin gap is formed. The optical axes of the prisms are parallel to each other and to the facing planes, and the prisms define a pair of parallel further planes through which unpolarised light may be introduced normally to the further planes and the optical axes so as to reach directly the facing planes of the prism with incident angles equal to the Brewster angle $\theta$ for the refractive index for a P-polarisation ray. The difference between the square of the refractive index of the prisms for extraordinary rays and the square of the refractive index for ordinary rays is greater than unity. With this arrangement the beam separation efficiency is high but the prisms cannot be made small because the ordinary and extraordinary rays are not parallel when they are emitted from the polariser and further prisms are required to make them parallel.

It is an object of the present invention to provide a prism polariser which is small in size and enables complete separation of the incident beam so that the transmission loss and the crosstalk are minimised.

According to the present invention there is provided a prism polariser comprising a pair of uniaxial crystal prisms which define two facing planes extending parallel to one another and between which a thin gap is formed, the optical axes of the prisms being parallel to each other and to the facing planes, and each prism defining a further plane through which unpolarised light may be introduced substantially normally to the further plane and the optical axes so to reach directly the respective facing plane with an incident angle which is equal to the Brewster angle $\theta$ for the refractive index for a P-polarisation ray, the difference between the square of the refractive index of the prisms for extraordinary rays and the square of the refractive index of the prisms for ordinary rays being greater than 1, characterised in that the first one of the prims is of quadrilateral cross-sectional shape, the quadrilateral being defined by a triangle having apex angles equal to $\phi$, $2\phi$ and $(180°-3\phi)$ from which the apex angle equal to $\phi$ has been cut off, the angle $\phi$ being equal to $\theta+\delta$ where $\delta$ is less than 2°, and in that the second of the prisms is of triangular cross-sectional shape, the triangle having apex angles equal to $\phi$, $3\phi$ and $(180°-4\phi)$, in that the facing plane of the first prism is constituted by a part of a first side of the quadrilateral shape which is between the cut off apex and the apex of angle $(180°-3\phi)$ and in that the facing plane of the second prism is constituted by a part of a first side of the triangle shape which is between the apexes of angles $\phi$ and $3\phi$, whereby an unpolarised beam introduced substantially normally through either a second side of the first prism which is between the apexes of angle $\phi$ and $2\phi$ or through a second side of the second prism which is between the apexes of angles $\phi$ and $(180°-4\phi)$ so

as to reach the respective facing plane at an angle of incidence equal to θ will be split into ordinary and extraordinary beams which are emitted from the prisms, after reflection within the prisms, substantially in parallel and substantially normally to the third side of the second prism, and to the side of the first prism between the apexes of the angles 2φ and (180°−3φ) respectively.

An embodiment of the present invention will now be described, by way of example, with reference to the accompanying drawings, in which:

Fig. 1 is a view showing an example of a prism polariser which is geometrically similar to embodiments of the present invention;

Fig. 2 is a view showing the relation between the width of an optical beam and the size of the polariser of Fig. 1;

Fig. 3 is a detailed view of facing surfaces of a pair of prisms making up the polariser of Fig. 1;

Figs. 4 through 7 are views showing the functioning of an optical circulator using prism polarisers of the type shown in Fig. 1;

Fig. 8 is a detailed view of a rotatory polarisation device used in the optical circulator of Figs. 4 through 7; and

Fig. 9 is a view of an embodiment of the present invention.

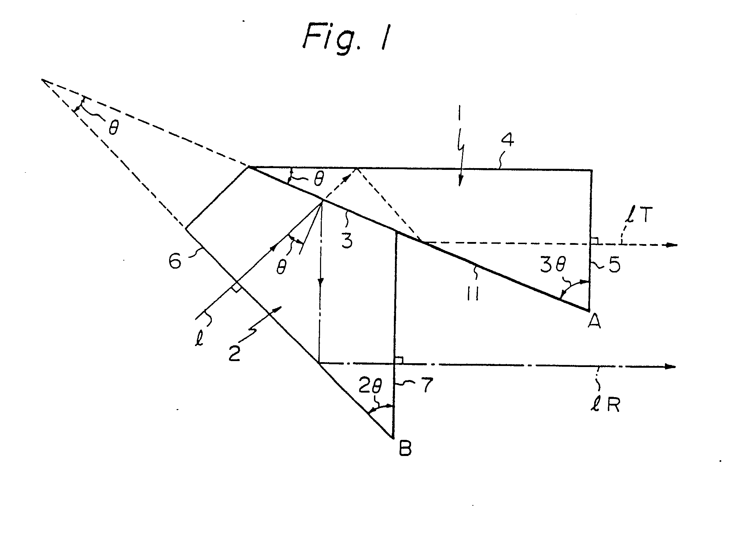

In Fig. 1, reference numerals 1 and 2 designate optical prisms of triangular prism shape and quadrilateral prism shape, respectively. Each prism is made or rutile ($TiO_2$: titanium dioxide). The optical axis of each prism is perpendicular to the drawing. Reference numeral 3 designates a facing plane between the prisms 1 and 2. In fact, there is a very thin gap of about 10 μ between the prisms 1 and 2 so that a thin layer of air is formed therebetween. Such a gap is formed by disposing spacers such as thin wires of 10 μ diameter between the two prisms which are combined with each other by an adequate means. Instead of forming such an air gap, the two prisms may be combined by means of an adherent agent which has an optical characteristic suitable for achieving the optical functions described later.

The prism 1 has optically significant surfaces 4, 5, 11. The prism 2 has optically significant surfaces 6 and 7. The surface 4 of the prism 1 is inclined by an angle θ with respect to the facing plane 3. The angle θ is the Brewster angle for the P-polarisation rays which pass through the surface of the prism from the inside to the outside thereof. The surface 6 of the prism 2 is also inclined by the Brewster angle θ with respect to the facing plane 3. The titanium dioxide has two refractive indices $n_o$ and $n_e$ for ordinary rays and extraordinary rays, respectively. The refractive index $n_o$ for ordinary rays is 2.46 at the wavelength of 1.3 μm. The refractive index $n_e$ for extraordinary rays is 2.72 at the wavelength of 1.3 μm. The ordinary ray is a ray which polarisation plane is perpendicular to the optic axis. The extraordinary ray is a ray which polarisation plane is paralled to the optical axis. The optical axis of this titanium dioxide crystal is arranged so that P-polarisation rays are transmitted as being ordinary rays while S-polarisation rays are reflected as being extraordinary rays.

The Brewster angle θ is defined on the basis of the refractive index of $n_o$ for the ordinary rays as follows.

$$\theta = \text{arccot } n_o \fallingdotseq 22.1°$$

An incident beam I introduced perpendicularly (normally) through the surface 6 of the prism 2 has an angle of incidence of θ with respect to the facing plane 3. The surface 5 and the surface 7 are parallel to each other and perpendicular to the beams $I_T$ and $I_R$ which are emitted out of the prisms 1 and 2, resepctively. In this example, the vertical angles A and B which define the surfaces 5 and 7 of the prism 1 and 2 are 3θ and 2θ, respectively.

The above described assembly of prisms 1 and 2 operates as follows:

A beam of unpolarised light (natural light) I enters the prism 2 through the surface 6 normally to this surface 6. The angle of incidence of this beam I to the facing plane 3 is the Brewster angle θ. Therefore, ordinary rays included within the unpolarised beam I pass completely through this facing plane 3. On the other hand, extraordinary rays included within the upolarised beam I are totally reflected since the extraordinary rays in the titanium dioxide meet the total reflecting condition represented by the formula

$$n_e \sin \theta \fallingdotseq 1.02 > 1.$$

Accordingly, the natural light I is completely separated into two polarised beams, i.e. one is a beam $I_T$ of ordinary rays and the other is a beam $I_R$ of extraordinary rays. In the polarisers of the prior art comprising prisms of calcite, such complete separation cannot be achieved. This problem is obviated in the above-described polariser comprising prisms of titanium dioxide.

Any other anisotropic material can be used instead of titanium dioxide if the optical characteristics of the material meets the following conditions with respect to the refractive index $n_o$ for ordinary rays, the refractive index $n_e$ for extraordinary rays, and the Brewster angle θ for ordinary rays.

| | | |
|---|---|---|
| | $n_e \sin \theta > 1$ | (1) |
| | $\cot \theta = n_o$ | (2) |
| from (1) | $n_e^2 > \csc^2 \theta$ | (1)′ |
| from (2) | $n_o^2 = \cot^2 \theta$ | (2)′ |
| (1)′−(2)′ makes | $n_e^2 - n_o^2\ 1$ | (3) |

The formula (1) represents the condition that the extraordinary rays are totally reflected at the boundary surface. The formula (2) represents the condition that the ordinary rays pass through the boundary surface. The formula (3) is derived from the formulas (1) and (2). Therefore a beam of rays which meets the formula (3) is completely separated into a beam of ordinary rays and another beam of extraordinary rays. In the case that titanium dioxide is used, the value of $n_e^2 - n_o^2$ is approximately, 1.35 at the wavelength of 1.3 µm. Therefore the titanium dioxide meets the condition of formula (3).

If the pair of prisms are combined by an adhesive agent of refractive index of n instead of forming a gap of air between the prisms, the formula (1) is rewritten to $n \sin \theta > n$, and the formula (3) is rewritten to $n_e^2 - n_o^2 > n^2$.

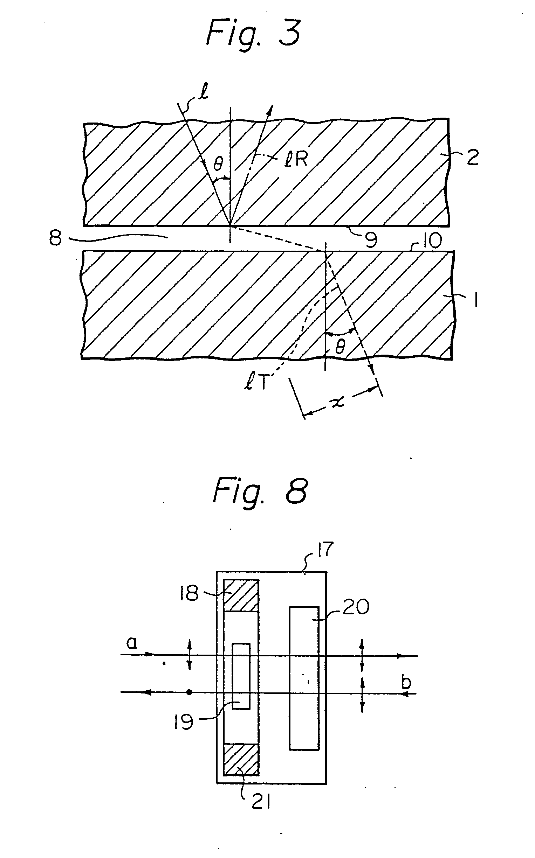

In Fig. 1, the incident beam I (solid line) is completely separated into a polarised beam $I_T$ (dotted line) of ordinary rays and another polarised beam $I_R$ (a dash-dot line) of extraordinary rays. The beams $I_T$ of ordinary rays enters into the prism 1 through the gap existing on the facing plane 3, in the same direction as the incident beam I. The path of the beam $I_T$ is shown in Fig. 3. The beam $I_T$ is refracted at the boundary surface 9 between the prism 2 and the gap 8, and then refracted again at the boundary surface 10 between the prism 1 and the gap 8. At the second refraction, the beam $I_T$ is refracted in the reverse direction to the refraction direction at the first refraction. The second refraction angle is equal to the Brewster angle θ as illustrated in Fig. 3. Therefore the beam $I_T$ of ordinary rays in the prism 1 is in parallel to the incident beam I. The distance x between the beams I and $I_T$ is represented as follows.

$$x = t \cdot \sin (90° - 2\theta)/\sin \theta$$

in which t is depth of the gap 8.

In an example, x=19 µm provided that the Brewster angle θ=22.1° and t=1.0 µm. Such a distance x can be neglected.

The beam $I_T$ of ordinary rays passes through the prism 1 while the beam $I_R$ of extraordinary rays passes through the prism 2. The beams $I_T$ and $I_R$ are totally reflected twice within the respective prisms 1 and 2 as follows. The beam $I_T$ of ordinary rays included within the incident beam I is totally reflected at the surface 4 and the surface 11 which is a continuation of the facing plane 3. The beam $I_R$ of extraordinary rays is totally reflected at the facing plane 3 and the surface 6. The two beams $I_T$ and $I_R$ are symmetrically separated with respect to the facing plane 3 and reflected at the surfaces 4 and 6 which are included by the same angle of θ with respect to the facing plane 3. Therefore, the two beams $I_T$ and $I_R$ are made parallel as a result of being totally reflected twice within the respective prisms. The parallel beams $I_T$ and $I_R$ pass through the end surfaces 5 and 7, out of the prisms 1 and 2, respectively. The exit beams $I_T$ and $I_R$ are normal to the end surfaces 5 and 7.

Thus, the two separated beams of ordinary rays and extraordinary rays are in parallel without using further optical devices. Therefore, an optical circulator of small size and comprising a small number of parts can be realised as described below.

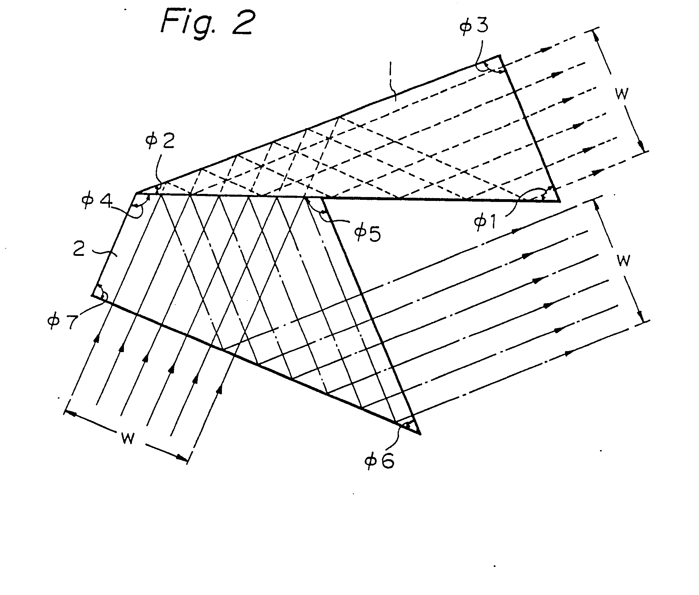

In Fig. 2, the width of each beam within each prism is illustrated so as to show that the polariser is small with respect to the beam width, i.e., almost the whole width of the prisms is actually used for the passage of the beam, and the exit beams are close to each other.

The angles of the prisms are as follows.

$$\phi_1 = 66.29°$$
$$\phi_2 = 22.10°$$
$$\phi_3 = 91.61°$$
$$\phi_4 = 112.10°$$
$$\phi_5 = 113.71°$$
$$\phi_6 = 44.19°$$
$$\phi_7 = 90°$$

As can be seen from the drawing, substantially all the inner portion of each prism is effectively used for the passage of the beams of width w. Also, it can be seen that the parallel exit beams are close to each other.

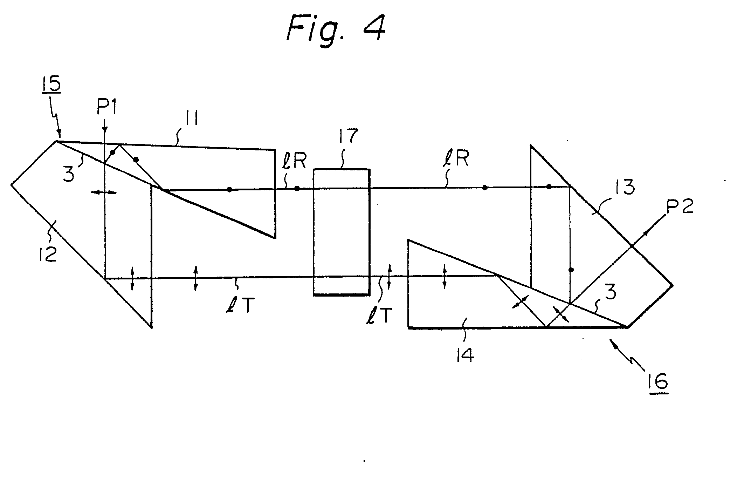

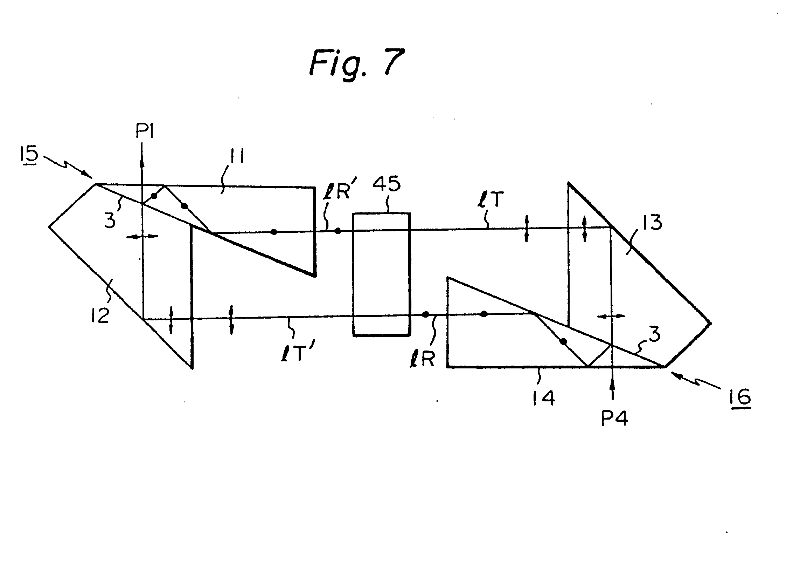

An optical circulator using the above described polariser is illustrated in Figs. 4 and 7. This optical circulator includes a first polariser 15 which comprises a pair of prisms 11, 12 and a second polariser 16 which comprises a pair of prisms 13, 14. A rotary polarisation device 17 is disposed between the first and the second polariser 15, 16.

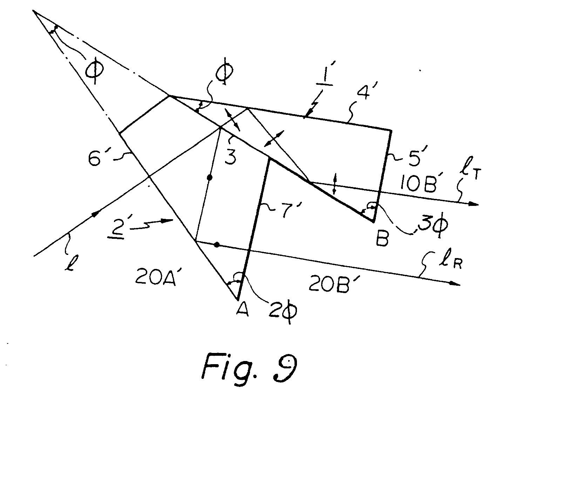

The rotary polarisation device 17 is illustrated in Fig. 8. The device 17 comprises a Faraday rotator 21 for 45° rotation of the polarisation plane and a rotary polarisation plate 20 such as a half wave plate. The Faraday rotator 21 comprises a permanent magnet ring 18 for generating a magnetic field and a transparent magnetic piece 19 of YIG ($Y_3Fe_5O_{12}$) crystal. Both the Faraday rotator 21 and the rotary polarisation plate 20 rotates by 45° the polarisation plane of an optical beam which passes therethrough. The rotational directions of the Faraday rotator 21 and the rotary polarisation plate 20 are opposite to each other for a beam travelling from the left to the right in the drawing, while the rotational directions are the same for a beam travelling from the right to the left. The thickness and the position of the magnetic piece 19 or the rotary polarisation plate 20 are determined so that they achieve the above mentioned functions. The polarisation plane of a beam (a) travalling from the left is rotated by 45° by the Faraday rotator 21 in one direction and then rotated by 45° by the rotary polarisation plate 20 in the reverse direction so that the polarisation plane restores to the original position, i.e. the polarisation plane is unchanged by the rotary polarisation device 17. Therefore, if an ordinary rays is introduced from the left into the device 17, the ray exits out of the device as an ordinary ray. Similarly, if an extraordinary ray is introduced from the left into the device 17, the ray exits out of the device as an extraordinary ray.

On the other hand, the polarisation plane of a beam (b) travelling from the right is rotated by 45°

by the rotary polarisation plate 20 in one direction and then rotated again by 45° by the Faraday rotator 21 in the same direction so that the polarisation plane is rotated by 90° in total. Therefore, an ordinary ray from the right is changed to an extraordinary ray. Similarly, an extraordinary ray from the right is changed to an ordinary ray.

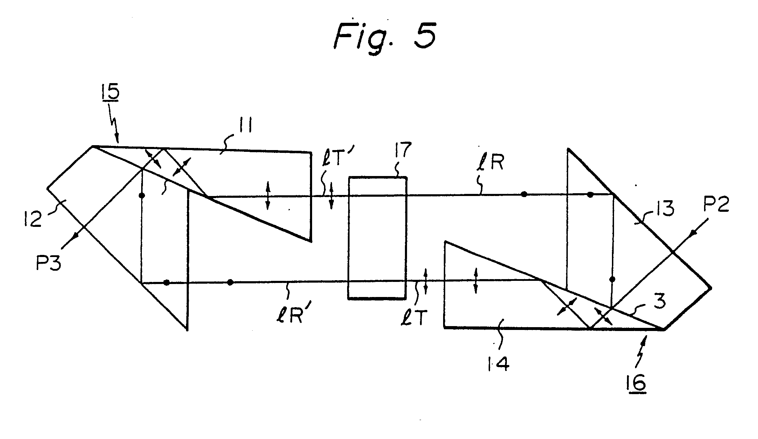

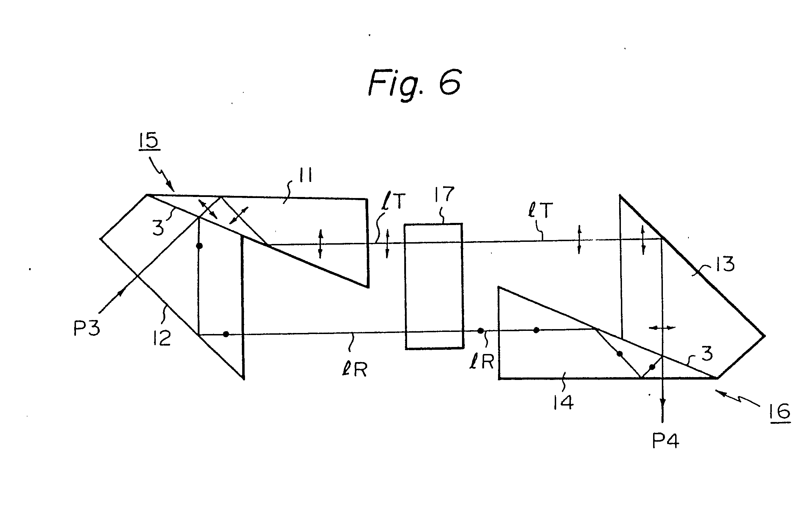

A first port $P_1$ (Fig. 4 and Fig. 7) is privided for the entrance and exit of beam into and out of the prism 11 of the first polariser 15. Similarly, a second port $P_2$ (Figs. 4 and 5), a third port $P_3$ (Figs. 5 and 6) and a fourth port $P_4$ (Figs. 6, 7) are provided at the positions facing the prisms 13, 12, 14, respectively.

The function of this optical circulator for a beam introduced from the first port $P_1$ is shown in Fig. 4. A natural optical beam from the first port $P_1$ is completely separated into an ordinary beam $I_T$ and an extraordinary beam $I_R$ in the manner described above at the facing plane of the prisms 11 and 12 of the first polariser 15. The rotary polarisation device 17 is arranged so that the polarisation planes of these beams from the left side in the drawing are not rotated as mentioned before. Therefore, the ordinary beam $I_T$ and the extraordinary beam $I_R$ are unchanged by the rotary polarisation device 17 and introduced into the second polariser 16 as being the ordinary beam and the extraordinary beam, respectively. At the facing plane 3 of the prisms 13, 14 of the second polariser 16, the extraordinary beam $I_R$ is totally reflected, while the ordinary beam $I_T$ is transmitted through this plane 3. Therefore, the two beams $I_T$ and $I_R$ are combined within the prism 13 and transmitted out of the prism 13 through the second port $P_2$.

The path of a natural beam from the second port $P_2$ is illustrated in Fig. 5. The beam is separated into an ordinary beam $I_T$ and an extra-ordinary beam $I_R$ which pass through the rotary polarisation device 17. As mentioned before, the polarisation plane of the beam from the right side in the drawing is rotated by 90° by the rotary polarisation device 17. Therefore, the ordinary beam $I_T$ is changed to an extraordinary beam $I_{R'}$ while the extraordinary beam $I_R$ is changed to an ordinary beam $I_{T'}$. Each of the beams $I_{R'}$ and $I_{T'}$ is introduced into the first polariser 15. At the facing plane 3 of the prisms 11, 12 of this first polariser 15, the extraordinary beam $I_{R'}$ is totally reflected, while the ordinary beam $I_{T'}$ is transmitted through this plane 3. Therefore the two beams $I_{R'}$ and $I_{T'}$ are combined together within the prism 12 and transmitted out of the prism 12 through the third port $P_3$.

The path of a natural beam from the third port $P_3$ is illustrated in Fig. 6. The beam from the third port $P_3$ is transmitted to the fourth port $P_4$ in the similar manner as the manner of the beam from the first port $P_1$.

The path of the natural beam from the fourth port $P_4$ is illustrated in Fig. 7. The beam from the fourth port $P_4$ is transmitted to the first port $P_1$ in the similar manner as the manner of the beam from the second port $P_2$.

In the above mentioned optical circulator, the incident beam upon the facing plane of the pair of prisms of the polariser is completely separated into an ordinary beam and an extraordinary beam due to the optical characteristic of this polariser. Also, the separated two beams are completely combined together in the other polariser. Therefore, the occurrence of transmission losses and crosstalk are minimised.

The separated ordinary beam $I_T$ and the extra-ordinary beam $I_R$ are parallel and close to each other. Therefore, one common rotary polarisation device 17 can be used for two beams instead of providing one device for each beam.

If the two beams are not parallel to each other, one common rotary polarisation device cannot be used for the reason set forth below. If the two beams are not parallel to each other, the direction of at least one beam does not align with the direction of the magnetic field of the Faraday rotator. In such a condition, a linearly polarised ray (a completely polarised ray) is changed to an elliptically polarised ray (an incompletely polarised ray) instead of being changed to a linearly polarised ray, after the rotation of the polarisation plane by the rotary polarisation device. Therefore, the homogeneity of each of the separated beams is degraded by passing through the rotatory polarisation device. Accordingly, it is necessary to apply one rotary polarisation device for every one beam, if the separated beams are not parallel.

Also, in the optical circulator illustrated in Figs. 4 through 7, another prism, a mirror or other optical devices for making the separated beams parallel are not necessary since the separated ordinary beam and extraordinary beam are parallel to each other. The transmission loss withing the above mentioned another prism, mirror or other optical devices is avoided. Therefore, the optical loss is decreased and the manufacturing cost can be lowered since the number of parts is decreased and the optical path length can be shortened.

An embodiment of the prism polariser according to the present invention is illustrated in Fig. 9. In the illustrated embodiment, the inlet and outlet end surfaces of each prism are substantially but not eactly normal to the directions of the inlet and outlet beams. Therefore, the reflected light at the inlet or outlet end surface does not go back in the same path. The inclined angle is within the range of $+1°\sim+6°$ or $-1°\sim-6°$ so that the aforementioned function of the prism can be maintained.

As illustrated in Fig. 9 the surface 4' of the prism 1' is inclined by an angle of $\phi$ with respect to the facing plane 3. Also, the surface 6' of the prism 2' is inclined by the angle $\phi$ with respect to the facing plane 3. $\phi$ is equal to $\theta+\delta$, where $\theta$ is the Brewster angle and $\delta$ is a small inclination by the angle of $3\phi$. The surface 7' of the prism 2' is inclinded by the angle of $2\phi$ with respect to surface 6'. The angle of incidence of the inlet beam I upon the facing plane 3 is maintained to be the Brewster angle $\theta$ for ordinary rays. The inlet beam I is thus not quite perpendicular to the surface 6' of the prism 2'. The separated ordinary beam $I_T$ and extraordinary beam $I_R$ are not quite perpendicular to the surface 5' of the prism 1' and the surface 7' of the prism 2' respectively.

The reflected light at the inlet end surface 6' or the outlet end surface 5' or 7' does not go back in the same path since the path is not perpendicular to each end surface. Consequently, adverse effects upon a laser source can be avoided. The absolute value of the small inclination angle δ is below 2° so that the difference of refraction angle of the ordinary beam and the extraordinary beam at each end surface can be maintained small enough for ensuring a reliable communication between the beam and an optical fiber at each port.

## Claims

1. A prism polariser comprising a pair of uniaxial crystal prisms (1', 2') which define two facing planes (3) extending parallel to one another and between which a thin gap is formed, the optical axes of the prisms being parallel to each other and to the facing planes, and each prism defining a further plane through which unpolarised light may be introduced substantially normally to the further plane and the optical axes so as to reach directly the respective facing plane (3) with an incident angle which is equal to the Brewster angle θ for the refractive index for a P-polarisation ray, the difference between the square of the refractive index of the prisms for extraordinary rays and the square of the refractive index of the prisms for ordinary rays being greater than 1, characterised in that the first one of the prisms (2') is of quadrilateral cross-sectional shape, the quadrilateral being defined by a triangle having apex angles equal to φ, 2φ and (180°−3φ) from which the apex angle equal to φ has been cut off, the angle φ being equal to θ+δ where δ is less than 2°, and in that the second of the prisms (1') is of triangular cross-sectional shape, the triangle having apex angles equal to φ, 3φ and (180°−4φ), in that the facing plane of the first prism is constituted by a part of a first side of the quadrilateral shape which is between the cut off apex and the apex of angle (180°−3φ) and in that the facing plane of the second prism is constituted by a part of a first side of the triangle shape which is between the apexes of the angles φ and 3φ, whereby an unpolarised beam introduced substantially normally either through a second side of the first prism which is between the apexes of angle φ and 2φ or through a second side of the second prism which is between the apexes of angles φ and (180°−4φ) so as to reach the respective facing plane at an angle of incidence equal to θ will be split into ordinary and extraordinary beams which are emitted from the prisms, after reflection within the prisms, substantially in parallel and substantially normally to the third side of the second prism and to the side of the first prism between the apexes of angles 2φ and (180°−3φ) respectively.

2. A prism polariser according to claim 1, characterised in that each prism (1', 2') is made of titanium dioxide.

3. Use of a prism polariser according to claim 1 or 2 in an optical circulator comprising two prism polarisers (15, 16), wherein the said third sides of the second prisms face each other so that the paths of said ordinary and extraordinary beams ($I_R$, $I_T$) from one of of the two prism polarisers (15, 16) substantially coincide with the paths of the corresponding beams from the other of the two prism polarisers (15, 16) and a rotatory polarisation device (17) is disposed between the two prism polarisers (15, 16), the rotatory polarisation device (17) being arranged so that it rotates the polarisation plane of a polarised beam from one direction by 90°, while it does not rotate the polarisation plane of a polarised beam from the reverse direction.

## Patentansprüche

1. Prismenpolarisator mit einem Paar von uniaxialen Kristallprismen (1', 2'), welche zwei einander zugewandte Ebenen (3) definieren, die sich parallel zueinander erstrecken und zwischen denen ein dünner Spalt gebildet ist, wobei die optischen Achsen der Prismen parallel zueinander und zu den einander zugewandten Ebenen sind, und wobei jedes Prisma eine weitere Ebene definiert, durch welche unpolarisiertes Licht im wesentlichen rechtwinklig zu der weiteren Ebene und den optischen Achsen eingeführt werden kann, so daß es direkt die jeweils zugewandte Ebene (3) mit einem Einfallswinkel erreicht, der gleich dem Brewster-Winkel θ für den Brechungsindex für einen P-Polarisationsstrahl ist, wonei die Differenz zwischen dem Quadrat der Brechungsindizes der Prismen für außerordentliche Strahlen und das Quadrat der Brechungsindizes der Prismen für ordentliche Strahlen größer als 1 ist, dadurch gekennzeichnet, daß das erste der Prismen (2') von vierseitiger Querschnittsform ist, wonei die vier Seiten durch ein Dreieck definiert sind, das Scheitelwinkel gleich φ, 2φ und (180°−3φ) hat, von denen der Scheitelwinkel gleich φ abgeschnitten ist, der Winkel φ gleich θ+δ ist, wobei δ kleiner als 2° ist, und daß das zweite der Prismen (1') von dreieckiger Querschnittsform ist, wonei das Dreieck Scheitelwinkel geleich φ, 3φ und (180°−4φ) hat, daß die zugewandte Ebene des ersten Prismas von einem Teil einer ersten Seite der vierseitigen Form gebildet ist, der zwischen den weggeschnittenen Scheitel und dem Scheitelwinkel (180°−3φ) ist, und daß die zugewandte Ebene des zweiten Prismas durch einen Teil einer ersten Seite von der dreieckigen Form gebildet ist, welche zwischen den Scheiteln der Winkel φ und 3φ ist, wodurch ein unpolarisierter Strahl, der im wesentlichen rechtwinklig entweder durch eine zweite Seite des ersten Prismas, welche zwischen den Scheiteln der Winkel φ und 2φ ist, oder durch eine zweite Seite des zweiten Prismas, welche zwischen den Scheiteln der Winkeln φ und (180°−4φ) ist, um so die jeweils zugewandte Ebene unter einem Einfallswinkel gleich θ zu

erreichen, aufgeteilt wird in ordentliche und außerordentliche Strahlen, welche von den Prismen emittiert werden, nach Reflexion innerhalb der Prismen, im wesentlichen parallel und im wesentlichen rechtwinklig zu der dritten Seite des zweiten Prismas bzw. zu der Seite des ersten Prismas zwischen den Scheiteln der Winkeln $2\phi$ und $(180°-3\phi)$.

2. Prismenpolarisator nach Anspruch 1, dadurch gekennzeichnet, daß jedes Prisma (1', 2') aus Titandioxide hergestellt ist.

3. Verwendung eines Prismenpolarisators nach Anspruch 1 oder 2 in einem optischen zirkulator, mit zwei Polarisationsprismen (15, 16), bei denen die genannten dritten Seiten der zweiten Prismen einander so zugewandt sind, daß die Wege der genannten ordentlichen und außerordentlichen Strahlen ($l_R$, $l_T$) von einem der beiden Polarisationsprismen (15, 16) im wesentlichen mit den Wegen der entsprechenden Strahlen von dem anderen der beiden Polarisationsprismen (15, 16) koinzidieren und eine Rotationspolarisations-einrichtung (17) zwischen den beiden Polarisationsprismen (15, 16) angeordnet ist, wobei die Rotationspolarisationseinrichtung (17) so angeordnet ist, daß sie die Polarisationsebene eines polarisierten Strahls von einer Richtung um 90° dreht, während sie die Polarisationsebene des polarisierten Strahls von der entgegengesetzten Richtung nicht dreht.

**Revendications**

1. Polariseur à prismes comportant deux prismes en cristal uniaxial (1', 2') qui définissent deux plans de face (3) parallèles entre eux et entre lesquels est formé un mince intervalle, les axes optiques des prismes étant parallèles entre eux et aux plans de face et chaque prisme définissant un autre plan par lequel de la lumière non polarisée peut être introduite pratiquement perpendiculairement à l'autre plan et aux axes optiques de manière à atteindre directement le plan de face respectif (3) avec un angle d'incidence qui est égal à l'angle de Brewster $\theta$ pour l'indice de réfraction d'un rayon de polarisation P, la différence entre le carré de l'indice de réfraction des prismes pour des rayons extraordinaires et le carré de l'indice de réfraction des prismes pour des rayons ordinaires étant supérieure à l'unité, caractérisé en ce que le premier des prismes (2') a une forme en coupe de quadrilatère, le quadrilatère étant défini par un triangle ayant des angles au sommet égaux à $\phi$, $2\phi$ et $(180°-3\phi)$ dont l'angle au sommet égal à $\phi$ a été couplé, l'angle $\phi$ étant égal à $\theta+\delta$, où $\delta$ est inférieur à 2° et en ce que le second des prismes (1') a une forme triangulaire en coupe, le triangle ayant des angles au sommet éqaux à $\phi$, $3\phi$ et $(180°-4\phi)$, en ce que le plan de face du premier prisme est constitué par une partie d'un premier côté de la forme quadrilatère qui se trouve entre le sommet coupé et le sommet d'angle $(180°-3\phi)$ et en ce que le plan de face du second prisme est constitué par une partie d'un premier côté de la forme triangulaire qui se trouve entre les sommets des angles $\phi$ et $3\phi$ de manière qu'un faisceau non polarisé introduit pratiquement perpendiculairement â un second côté du premier prisme qui se situe entre les sommets d'angles $\phi$ et $2\phi$ ou par un second côté du second prisme qui se situe entre les sommets d'angles $\phi$ et $(180°-4\phi)$ afin d'atteindre le plan de face respectif sous un angle d'incidence égal à $\theta$, se trouve séparé en un faisceau ordinaire et un faisceau extraordinaire qui sont émis par les prismes après réflexion dans les prismes, pratiquement parallèlement en pratiquement perpendiculairement au troisième côté du second prismes et au côté du premier prisme entre les sommets d'angles $2\phi$ et $(180°-3\phi)$ respectivement.

2. Polariseur à prismes selon la revendication 1, caractérisé en ce que chaque prisme (1', 2') est en bioxyde de titane.

3. Utilisation d'un polariseur à prismes selon la revendications 1 ou comme un circulateur optique comprenant deux polariseurs à prismes (15, 16), dans lequel lesdits troisièmes côtés des seconds prismes se font face de manière que les trajets desdits faisceaux ordinaires et extraordinaires ($1_R$, $1_T$) provenant de l'un des deux polariseurs à prismes (15, 16) coincident pratiquement avec les trajets des faisceaux correspondant provenant de l'autre des deux polariseurs à prismes (15, 16), un dispositif de polarisation rotatoire (17) étant disposé entre les deux polariseurs à prismes (15, 16), ce dispositif de polarisation rotatoire (17) étant agencé de manière qu'il fasse tourner le plan de polarisation d'un faisceau polarisé provenant d'une direction de 90° tandis qu'il ne fait pas tourner le plan de polarisation d'un faisceau polarisé provenant de la direction inverse.

Fig. 1

Fig. 2

## Fig. 3

## Fig. 8

# *Fig. 4*

# Fig. 5

Fig. 6

# Fig. 7

Fig. 9